# EUROPEAN PATENT SPECIFICATION

(11) **EP 1 177 499 B1**
(45) Date of publication and mention of the grant of the patent: **05.11.2008**
(21) Application number: 00902227.8
(22) Date of filing: 13.01.2000
(51) Int. Cl.: G06F 9/46, G06F 15/16

(54) **PROCESSOR AND METHOD OF EXECUTING INSTRUCTIONS FROM SEVERAL INSTRUCTION SOURCES**
PROZESSOR UND VERFAHREN ZUM AUSFÜHREN VON INSTRUKTIONEN VON MEHREREN INSTRUKTIONSQUELLEN
PROCESSEUR ET PROCEDE PERMETTANT L'EXECUTION D'INSTRUCTIONS PROVENANT DE PLUSIEURS SOURCES D'INSTRUCTIONS

(30) Priority: 18.01.1999 SE 9900118
(43) Date of publication of application: 06.02.2002
(73) Proprietor: Axis AB, 223 70 Lund (SE)
(72) Inventor: SANDSTRÖM, Stefan, S-227 33 Lund (SE); LUNDBERG, Stefan, S-224 64 Lund (SE)
(74) Representative: Johansson, Magnus
(86) International application number: PCT/SE2000/000040
(87) International publication number: WO 2000/042506

(56) References cited:
- EP-A2- 0 334 526
- US-A- 5 410 544

## Description

### Field of the Invention

The present invention relates generally to a processor and a method of executing instructions from several instruction sources, and more particularly to an internal processor, wherein the execution of the internal processor is controlled by an external processor.

### Description of the Prior Art

A conventional processor or CPU regularly comprises at least a processing unit and a control unit including various processing and control circuits as well as a set of registers intended for temporary storage of instructions, memory addresses, and data. The control circuits in the control unit are responsible for the machine or instruction cycle comprising the steps of fetching instructions, decoding opcodes, routing information to the intended entity, and providing proper control signals for all CPU actions. Program instructions and data are fetched from a primary memory.

However, in some cases it is desired to control a processor integrated on a general or special purpose chip. For example during the test phase or even during real operation of the chip it is desired to have the complete control of the execution and to read information of the internal state of the processor.

US-A-5 410 544 discloses an apparatus for testing a unit comprising an internal processor coupled to a register by an internal bus. In one embodiment the apparatus provides external control to a flash memory unit that has an internal processor. The internal processor is programmed so that it can execute an algorithm which performs an operation on the unit when it is executed. An internal bus is used by the internal processor to access a state datum when the internal processor is executing the algorithm. The apparatus comprises an external processor disposed external to the unit and an interface and switch disposed on the unit. The interface is coupled to the internal and externally processors and is for receiving a plurality of commands from the external processor. Examples of commands that may be sent from the external processor to the interface unit is read status or read the memory. Included in the commands is an ability to order the internal processor to execute an algorithm that has been stored within the internal processor. By issuing another command, a "trap door" command, the external processor can take control of some registers and thereby simulate the execution of algorithms by the internal processor.

### Summary of the Invention

According to the present invention an improved internal processor arranged on a chip is provided which permits control from an external processor in a transparent and efficient way.

This object is obtained by an internal processor, enabling execution of instructions from several instruction sources according to the invention. An interface arranged in the processor is connectable to at least an external instruction source, enabling execution interleaving of instructions from the several instruction sources, which execution is controlled by the external instruction source.

An advantage of the present invention is that the external processor can control the operation of the internal processor in an efficient way, and has the access to the internal state of the internal processor in the same way as the internal processor itself.

### Brief Description of the Drawings

In order to explain the invention in more detail and the advantages and features of the invention references in the following detailed description of the preferred embodiment are made to the accompanying drawings, in which
FIG 1 is a block diagram of an internal processor according to the invention connected to an external processor; and
FIG 2 is a flow chart of the instruction cycle in the internal processor of FIG 1.

### Detailed Description of the Invention

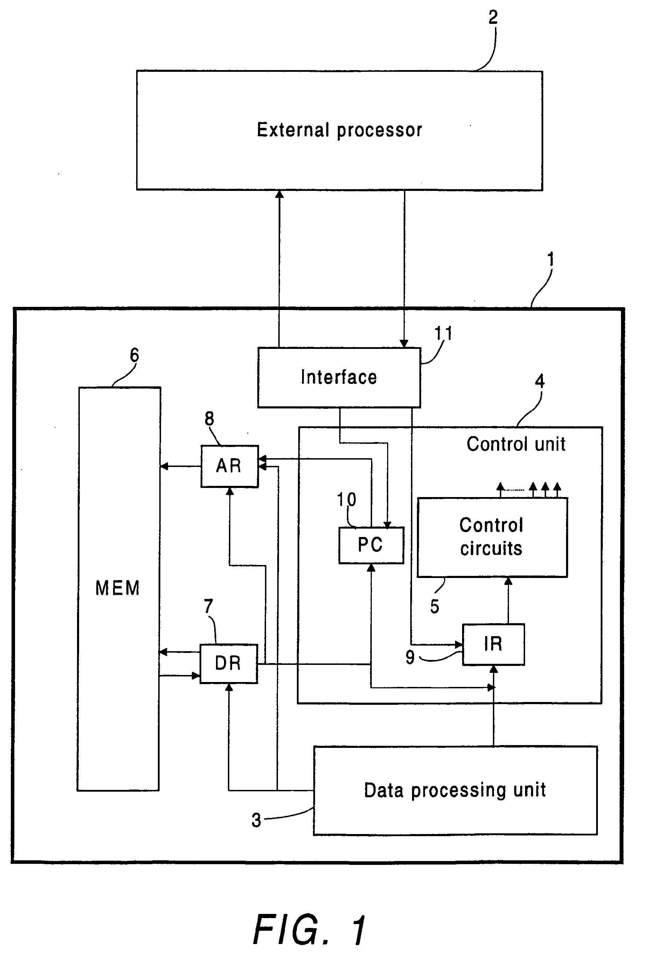

Referring to FIG 1, there is illustrated a processor or a CPU 1 capable of interpreting and executing programs. In some cases such a processor is integrated on a general purpose or special purpose chip. Therefore, the processor according to the invention is referred to as an internal processor. The internal processor according to the invention is designed to be controlled by another processor referred to as an external processor 2.

Similar to a general purpose processor one embodiment of the invention comprises a data processing unit 3 and a program control unit 4. The processing unit 3 further comprises different kinds of processing circuits not shown on the drawings and the control unit 4 comprises various control circuits 5. High speed registers are also included in the processor 1 for temporary storage of instructions, memory addresses, and data. The control unit 4 fetches instructions, decodes operation codes, generates control signals for the other components of the processor, and routs data and information through the different parts of the processor: registers, memory etc. In order to synchronize the different components a clock circuit, not shown in the drawings, is used to generate timing signals.

Programs and data are stored in a main memory and on chip main memory 6 in the embodiment. A transfer of data takes place between the memory 6 and a data register 7, and the memory address used is stored in an address register 8. An operation code of an instruction to be decoded and executed is stored in an instruction register 9. The address of the next instruction to be executed is stored in still another register referred to as a program counter 10.

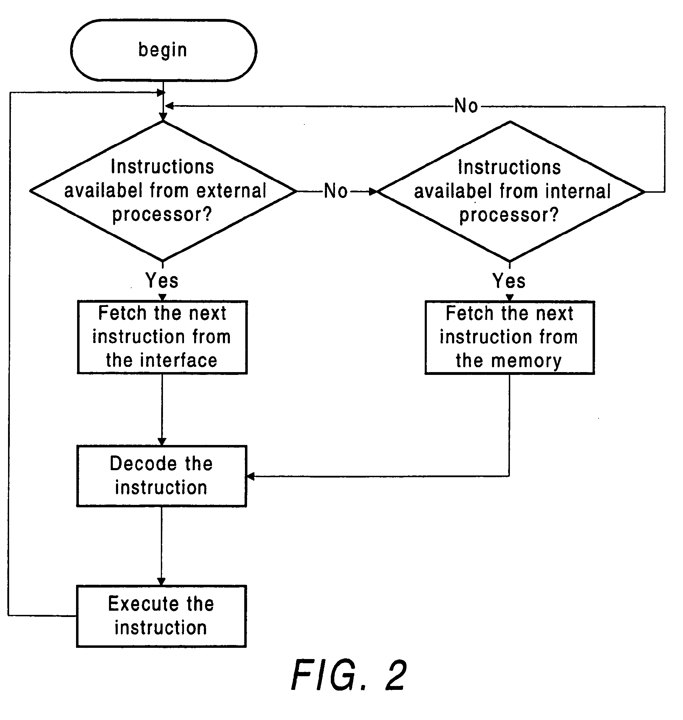

During the instruction cycle of the processor a sequence of actions or operations takes place, which is illustrated by the flow chart in FIG 2.

According to the present invention, the next instruction to be executed (operation code and operand) is fetched from the interface 11 if an instruction is provided by the external processor 2, and loaded to the instruction register 9 in the control unit 4. The external processor may provide the internal processor 1 with a sequence of instructions, i.e an instruction stream. However, if no instructions are provided by the external processor 2 the next instruction is fetched from the main memory 6, RAM or cache. The instruction is decoded and interpreted by the control circuits 5 and executed by the data processing unit. The results are placed in a suitable register in the data processing unit 3 or in the main memory 6.

Thus, the two different instruction streams are provided by means of the two instruction sources: the main memory 6 and the external processor 2 via the interface 11. These two instruction streams are almost completely independent. The program counter 10 is the only direct interaction available between the two instruction streams.

While instructions are provided by the external processor they are fetched by the internal processor via the interface 11 and then executed. When no further instructions are provided by the external processor 2, it provides the program counter of the internal processor 1 with an address of the next instruction and the normal operation of the internal processor 1 proceeds. The program counter 10 is automatically incremented after the next instruction has been fetched. Hence, the external processor 2 can control the operation of the internal processor in an efficient way, but not reversely.

In order to operate in a proper way the external processor may in some cases need feedback information from the interface 11.

Although the invention has been described by way of a specific embodiment thereof it should be apparent that the present invention provides a processor that fully satisfies the aims and advantages set forth above, and alternatives, modifications and variations are apparent to those skilled in the art.

As mentioned above the processor can be a part of a general purpose or special purpose chip in other embodiments of the invention. Thus, the processor in some cases has a completely different design and comprises for example additional registers, such as special purpose registers to facilitate branch control, facilities providing simultaneous processing of more than one instruction, and different kinds of data processing capabilities etc. However, the processor still has an interface enabling at least two different sources from which the processor fetches its instructions, one of which sources controls the execution of the internal processor.

## Claims

1. An internal processor (1) for the execution of instructions from several instruction sources (2;6), said internal processor (1) comprising a main memory (6), and **characterized by** interface means (11) connectable to at least an external instruction source (2), enabling execution interleaving of instructions from said instruction sources (2;6), controlled by said external instruction source (2), wherein the internal processor is arranged for:
for each instruction provided by an external instruction source (2), fetching the instruction from the interface means (11), decoding and executing said instruction; or, if there is no instruction provided by an external instruction source (2),
fetching an instruction from the main memory (6), decoding, and executing said instruction.

2. An internal processor according to claim 1, wherein said interface (11) is connected to a program register (10) of said internal processor (1) for the execution sequence control of said internal processor (1) by said external instruction source (2).

3. An internal processor (1) according to claim 1 or 2, wherein said interface (11) is connected to an instruction register (9) of said internal processor (1) for the execution sequence control of said internal processor (1) by said external instruction source (2).

4. A method of executing instructions from several instructions sources (2;6) in an internal processor (1) comprising a main memory (6) and interface means (11) connectable to at least an external instruction source (2), **characterized by** the steps of:
for each instruction provided by an external instruction source (2), fetching the instruction from the interface means (11), decoding and executing said instruction; or, if there is no instruction provided by an external instruction source (2),
fetching an instruction from the main memory (6), decoding, and executing said instruction.

5. A method according to claim 4, further comprising the step of:
fetching an instruction from a location in the main memory (6), which location is determined by the external instruction source (2).

## Patentansprüche

1. Interner Prozessor (1) zum Ausführen von Befehlen von zahlreichen Befehlsquellen (2;6), wobei der interne Prozessor (1) einen Hauptspeicher (6) enthält und durch eine Schnittstelleneinrichtung (11) **gekennzeichnet** ist, die mit wenigstens einer externen Befehlsquelle (2) verbunden werden kann, wodurch eine verschachtelte Ausführung von Befehlen von den Befehlsquellen (2;6), gesteuert durch die externe Befehlsquelle (2), ermöglicht ist, wobei der interne Prozessor dazu eingerichtet ist:
für jeden Befehl, der von der externen Befehlsquelle (2) zugeführt wird, den Befehl von der Schnittstelleneinrichtung (11) abzurufen, diesen Befehl zu decodieren und abzurufen, oder, sofern es keinen Befehl gibt, der von einer externen Befehlsquelle (2) zugeführt wird,
einen Befehl vom Hauptspeicher (6) abzurufen und diesen Befehl zu decodieren und auszuführen.

2. Interner Prozessor nach Anspruch 1, bei dem die Schnittstelle (11) mit einem Programmregister (10) des internen Prozessors (1) für die Ausführungssequenzsteuerung des internen Prozessors (1) durch die externe Befehlsquelle (2) verbunden ist.

3. Interner Prozessor (1) nach Anspruch 1 oder 2, bei dem die Schnittstelle (1) mit einem Befehlsregister (9) des internen Prozessors (1) zur Ausführungssequenzsteuerung des internen Prozessors (1) durch die externe Befehlsquelle (2) verbunden ist.

4. Verfahren zum Ausführen von Befehlen von zahlreichen Befehlsquellen (2;6) in einem internen Prozessor (1), der einen Hauptspeicher (6) und eine Schnittstelleneinrichtung (11) enthält, die mit wenigstens einer externen Befehlsquelle (2) verbunden werden kann,
**gekennzeichnet durch** folgende Schritte:
Abrufen des Befehls von der Schnittstelleneinrichtung (11), Decodieren und Ausführen des Befehls für jeden Befehl, der von einer externen Befehlsquelle (2) zugeführt wird; oder, sofern es keinen Befehl gibt, der von einer externen Befehlsquelle (2) zugeführt wird,
Abrufen eines Befehls vom Hauptspeicher (6), Decodieren und Ausführen des Befehls.

5. Verfahren nach Anspruch 4, weiterhin enthaltend folgenden Schritt:
Abrufen eines Befehls von einem Ort im Hauptspeicher (6), wobei dieser Ort durch die externe Befehlsquelle (2) bestimmt wird.

## Revendications

1. Processeur interne (1) pour l'exécution d'instructions provenant de plusieurs sources d'instructions (2 ; 6), ledit processeur interne (1) comprenant une mémoire principale (6), et étant **caractérisé par** des moyens d'interface (11) pouvant être connectés à au moins une source d'instructions externe (2), permettant l'entrelacement d'exécution d'instructions provenant desdites sources d'instructions (2 ; 6), commandées par ladite source d'instructions externe (2), dans lequel le processeur interne est agencé pour :
pour chaque instruction fournie par une source d'instructions externe (2), aller chercher l'instruction dans les moyens d'interface (11), décoder et exécuter ladite instruction ; ou s'il n'y a pas d'instruction fournie par une source d'instructions externe (2),
aller chercher une instruction dans la mémoire principale (6), décoder et exécuter ladite instruction.

2. Processeur interne selon la revendication 1, dans lequel ladite interface (11) est connectée à un registre de programme (10) dudit processeur interne (1) pour la commande de la séquence d'exécution dudit processeur interne (1) par ladite source d'instructions externe (2).

3. Processeur interne (1) selon la revendication 1 ou 2, dans lequel ladite interface (11) est connectée à un registre d'instruction (9) dudit processeur interne (1) pour la commande de la séquence d'exécution dudit processeur interne (1) par ladite source d'instructions externe (2).

4. Procédé d'exécution d'instructions provenant de plusieurs sources d'instructions (2 ; 6) dans un processeur interne (1) comprenant une mémoire principale (6) et des moyens d'interface (11) pouvant être connectés à au moins une source d'instructions externe (2),
**caractérisé par** les étapes consistant à :
pour chaque instruction fournie par une source d'instructions externe (2), aller chercher l'instruction dans les moyens d'interface (11), décoder et exécuter ladite instruction ; ou s'il n'y a pas d'instruction fournie par une source d'instructions externe (2),
aller chercher une instruction dans la mémoire principale (6), décoder et exécuter ladite instruction.

5. Procédé selon la revendication 4, comprenant en outre l'étape consistant à :
aller chercher une instruction dans un emplacement de la mémoire principale (6), lequel emplacement est déterminé par la source d'instructions externe (2).
